(19) **Europäisches Patentamt / European Patent Office / Office européen des brevets**

(11) **EP 4 660 904 A1**

(12) **EUROPEAN PATENT APPLICATION**
published in accordance with Art. 153(4) EPC

(43) Date of publication:
**10.12.2025 Bulletin 2025/50**

(21) Application number: **24750062.2**

(22) Date of filing: **24.01.2024**

(51) International Patent Classification (IPC):
***G06N 99/00*** (2019.01)   ***B65F 5/00*** (2006.01)

(52) Cooperative Patent Classification (CPC):
**B65F 5/00; G06N 99/00**

(86) International application number:
**PCT/JP2024/001947**

(87) International publication number:
**WO 2024/162112 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.02.2023   JP 2023015615**

(71) Applicants:
* **Kanadevia Corporation
  Osaka-shi, Osaka 559-8559 (JP)**
* **National University Corporation Nara Institute of
  Science and Technology
  Ikoma-shi, Nara 630-0192 (JP)**

(72) Inventors:
* **MATSUBARA, Takamitsu
  Ikoma-shi, Nara 630-0192 (JP)**
* **SASAKI, Hikaru
  Ikoma-shi, Nara 630-0192 (JP)**
* **KWON, Yuhwan
  Ikoma-shi, Nara 630-0192 (JP)**
* **HIRABAYASHI, Terushi
  Osaka-shi, Osaka 559-8559 (JP)**
* **KAWABATA, Kaoru
  Osaka-shi, Osaka 559-8559 (JP)**
* **ISE, Akifumi
  Osaka-shi, Osaka 559-8559 (JP)**

(74) Representative: **Grünecker Patent- und
Rechtsanwälte
PartG mbB
Leopoldstraße 4
80802 München (DE)**

(54) **INFORMATION PROCESSING DEVICE, WASTE TREATMENT SYSTEM, SEARCH METHOD, AND SEARCH PROGRAM**

(57)     To derive an appropriate control parameter for a device executing a task for treating waste. An information processing device (4) includes: an evaluation result obtaining section (406) configured to obtain a result of evaluation of each of a plurality of candidates for an optimum value of a control parameter for the waste treatment task conducted by an evaluator who observes execution of the task executed by applying the candidate; a predictive distribution calculation section (402) configured to update a predictive distribution of an evaluation function with use of the evaluation result; and an exploration section (403) configured to explore a candidate for the optimum value of the control parameter based on the updated predictive distribution.

FIG. 1

## Description

Technical Field

The present invention relates to an information processing device or the like for calculating a control parameter for use in a device for treating waste.

Background Art

In waste treatment facilities, attempts have conventionally been made to automate the control of devices for treating waste. For example, Patent Literature 1 below discloses a technique for quantifying the degree of mixing of garbage accumulated in the garbage pit and automatically controlling a crane for transporting the garbage in the garbage pit based on the quantified garbage mixing degree. According to the technique disclosed in this document, the mixing degree is quantified based on the number of times of mixing. Then, according to this technique, a crane control instruction that designates a location at which the crane grabs garbage and a location at which the crane releases the grabbed garbage is generated based on the mixing degree.

Citation List

[Patent Literature]

[Patent Literature 1]
Japanese Patent Application Publication Tokukai No. 2010-275064

Summary of Invention

Technical Problem

The garbage accumulated in the garbage pit is inhomogeneous in both material and condition, including various types of garbage, so that its properties are not uniform. Thus, when the technique of Patent Literature 1 is applied to mixing of garbage in an actual garbage pit, the following situations may be anticipated: the assumed amount of garbage cannot be grabbed, or a greater amount of garbage than expected is grabbed.
That is, to improve the accuracy of the automatic control of a device for treating waste, it is necessary not only to appropriately determine what task should be executed by the device, but also to appropriately set the control parameter for causing the device to execute the task. As a technique for optimizing the control parameter, known is a technique in which the task is executed by applying control parameters of multiple different values, and then, each control parameter is evaluated as to the appropriateness based on measurements of a sensor or the like during the task execution.
However, not limited to the transportation of waste using cranes, deriving an appropriate control parameter for waste treatment is not easy. This is because there are many locations within waste treatment facilities where it is difficult to install sensors and some tasks are difficult to evaluate based on sensor measurements.
An object of an aspect of the present invention is to provide an information processing device or the like capable of deriving an appropriate control parameter for a device executing a predetermined task for treating waste.

Solution to Problem

To achieve the object, an information processing device in accordance with an aspect of the present invention includes: an evaluation result obtaining section configured to obtain, for a control parameter for causing a device to execute a predetermined task for treating waste, a result of evaluation of each of a plurality of candidates for an optimum value of the control parameter conducted by an evaluator who observes execution of the task executed by applying the candidate; a predictive distribution update section that updates a predictive distribution of an evaluation function for evaluating the control parameter with use of the evaluation result; and an exploration section that explores a candidate for the optimum value of the control parameter based on the updated predictive distribution.
To achieve the object, a waste treatment system in accordance with an aspect of the present invention includes: a device configured to execute a predetermined task for treating waste; an imaging device configured to capture execution of the task executed by applying each of a plurality of candidates for an optimum value of a control parameter for causing the device to execute the task; a display device configured to display a moving image or a plurality of still images constituting a time series, the moving image and the plurality of still images being captured by the imaging device; an input device configured to receive input of a result of evaluation of the candidate conducted by an evaluator who observes the execution of the task through the moving image or the still images displayed on the display device; and an information processing device configured to update a predictive distribution of an evaluation function for evaluating the control parameter with use of the evaluation result and to explore a candidate for the optimum value of the control parameter based on the updated predictive distribution.

To achieve the object, an exploration method in accordance with an aspect of the present invention is carried out by one or more information processing devices, and includes: an evaluation result obtaining step of obtaining, for a control parameter for causing a device to execute a predetermined task for treating waste, a result of evaluation of each of a plurality of candidates for an optimum value of the control parameter conducted by an evaluator who observes execution of the task executed by applying the candidate; a predictive distribution update step of updating a predictive distribution of an evaluation function for evaluating the control parameter with use of the evaluation result; and an exploration step of exploring a candidate for the optimum value of the control parameter based on the updated predictive distribution.

Advantageous Effects of Invention

In accordance with an aspect of the present invention, it is possible to derive an appropriate control parameter for a device executing a predetermined task for treating waste.

Brief Description of Drawings

Fig. 1 is a block diagram illustrating the configuration of the main sections of an information processing device in accordance with an embodiment of the present invention.
Fig. 2 is a diagram illustrating an overview of a waste treatment system in accordance with an embodiment of the present invention.
Fig. 3 is a diagram illustrating an example of generation of evaluation results.
Fig. 4 is a flowchart illustrating an exploration method in accordance with an embodiment of the present invention.

Description of Embodiments

[System overview]

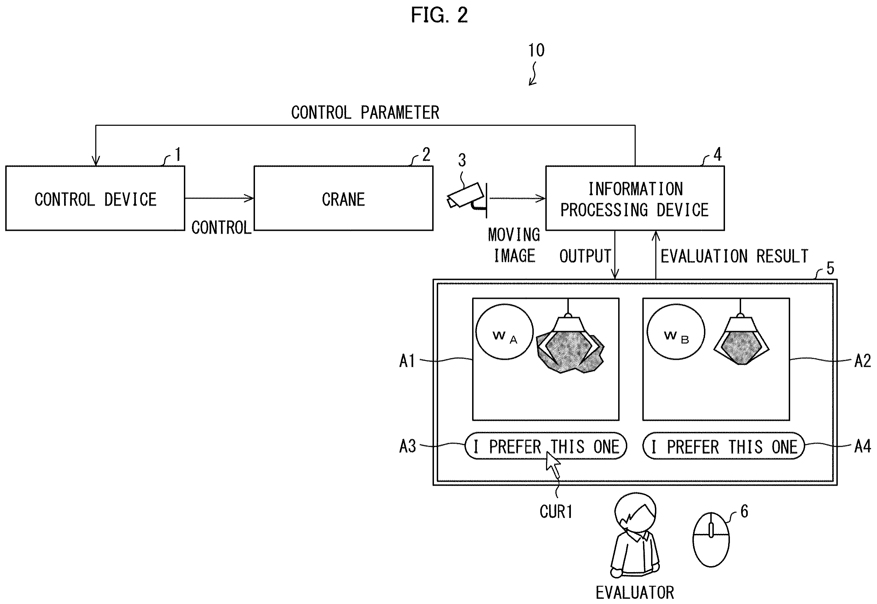

An overview of a waste treatment system 10 in accordance with an embodiment of the present invention will be described with reference to Fig. 2. Fig. 2 is a diagram illustrating an overview of the waste treatment system 10. As illustrated in Fig. 2, the treatment system 10 includes a control device 1, a crane 2, an imaging device 3, an information processing device 4, a display device 5, and an input device 6.
The treatment system 10 is a system for treating waste. In the present embodiment, described is an example in which a device for treating the waste is the crane 2 and the operation of the crane 2 is controlled by the control device 1. The information processing device 4 calculates a control parameter that specifies details of the control performed by the control device 1. Since the information processing device 4 calculates an appropriate control parameter, an appropriate automatic control over the crane 2 via the control device 1 is achieved.
Here, any device configured to execute a task for treating waste may be used, and is not limited to the crane 2. For example, in a case where waste materials are incinerated, various devices associated with the combustion control thereof may also be targeted for control. Hereunder, "crane" may be read as any "device" configured to execute a task for treating waste.
The crane 2 is a crane used to transport waste materials. Transporting waste materials is carried out in, for example, a pit for accumulating waste materials. The crane 2 may include, for example, a bucket having a plurality of claws for grabbing waste materials, an opening and closing mechanism for opening and closing the claws of the bucket, a lifting and lowering mechanism for lifting and lowering the bucket, and a moving mechanism for horizontally moving the bucket. In this case, the control device 1 can cause the crane 2 to execute a task, such as transporting and mixing waste materials in the pit, and loading waste materials into a hopper, by controlling the opening and closing mechanism, the lifting and lowering mechanism, and the moving mechanism.
The control parameter for causing the crane 2 to execute a predetermined task may be set in advance. For example, the bucket grabbing and lifting the waste materials moves horizontally while opening and closing the claws, to spread the waste materials over the path of movement of the bucket, so as to cause the crane 2 to execute the task of waste mixing. In this case, for example, it is sufficient to set a control parameter such that the timing of the opening and closing control of the bucket can be specified.
Although the details will be described later, the information processing device 4 explores a plurality of candidates for the optimum value of the control parameter. The control device 1 then controls the crane 2 in accordance with each candidate determined in the exploration for the control parameter and causes the crane 2 to execute the task.

The imaging device 3 captures the execution of the task executed by applying each of the plurality of candidates for the optimum value of the control parameter. The imaging device 3 may be any device capable of capturing an image available for determining whether the task is preferably executed. It is preferable that the imaging device 3 be a device that captures a moving image or a plurality of still images constituting a time series.

The images captured by the imaging device 3 are displayed on the display device 5. Fig. 2 depicts an example in which image A1 showing the execution of the task executed by applying control parameter $w_A$ and image A2 showing the execution of the task executed by applying control parameter $w_B$ are displayed on the display device 5. In addition, objects A3 and A4 through which evaluator's evaluation result are received are shown in association with the images A1 and A2, respectively.

The evaluator determines which of the execution of the task shown in the image A1 and the execution of the task shown in the image A2 is preferable, and selects the object A3 or A4 with cursor CUR1 via the input device 6 in accordance with the determination result. For example, the evaluator may select the object A3 when it is determined that the execution of the task shown in the image A1 is preferable. Such an evaluation of task execution is equal to an evaluation of the relative preference between the control parameter $w_A$ and the control parameter $w_B$, the control parameters being candidates for the control parameter applied to the task. Here, the evaluator is informed in advance of information serving as a criterion of the evaluation, such as the purpose of the task, what type of control is preferable, and the like. However, the evaluator does not need to be a person who has the operation skill of the crane 2.

The evaluation result by the evaluator is outputted to the information processing device 4 and is used to explore a candidate for the optimum value of the control parameter. Specifically, the information processing device 4 updates a predictive distribution of an evaluation function for evaluating the control parameter with use of the evaluation result, and then, the information processing device 4 explores a candidate for the optimum value of the control parameter based on the updated predictive distribution.

Then, the control device 1 causes the crane 2 to execute the task again using a newly determined control parameter. By repeating such processes, the information processing device 4 can determine the control parameter that is likely to yield a desired control result. This makes it possible to achieve an appropriate automatic control over the crane 2 via the control device 1.

As described in the foregoing, the treatment system 10 includes: the crane 2 that is a device configured to execute a predetermined task for treating waste; the imaging device 3 configured to capture execution of the task executed by applying each of a plurality of candidates for an optimum value of a control parameter for causing the crane 2 to execute the task; the display device 5 configured to display a moving image or a plurality of still images constituting a time series, the moving image and the plurality of still images being captured by the imaging device 3; the input device 6 configured to receive input of a result of evaluation of the candidate conducted by an evaluator who observes the execution of the task through the moving image or the still images displayed on the display device 5; and the information processing device 4 configured to update a predictive distribution of an evaluation function for evaluating the control parameter with use of the evaluation result and to explore a candidate for the optimum value of the control parameter based on the updated predictive distribution.

Here, it is highly difficult to formulate the evaluation function for evaluating whether the control parameter applied to the task for treating inhomogeneous waste is appropriate. Thus, the treatment system 10 employs the configuration in which the predictive distribution of the evaluation function is updated with use of the evaluation result by the evaluator and a candidate for the optimum value of the control parameter is explored based on the updated predictive distribution. This makes it possible to determine a candidate for the optimum value of the control parameter even for a task where formulation of the evaluation function is difficult. Thus, the treatment system 10 can achieve an advantageous effect of being capable of deriving an appropriate control parameter for a device executing a predetermined task for treating waste.

In the example of Fig. 2, the images are displayed on the display device 5 external to the information processing device 4; however, when the information processing device 4 is provided with a display device, the moving image or the plurality of still images constituting a time series may be displayed on this display device. Further, although Fig. 2 depicts an example in which the input device 6 is a mouse, the input device 6 may be any device configured to receive input of an evaluation result by an evaluator. For example, when the information processing device 4 is provided with a touch panel, the touch panel may be employed as the input device to receive input of an evaluation result.

[Configuration of information processing device]

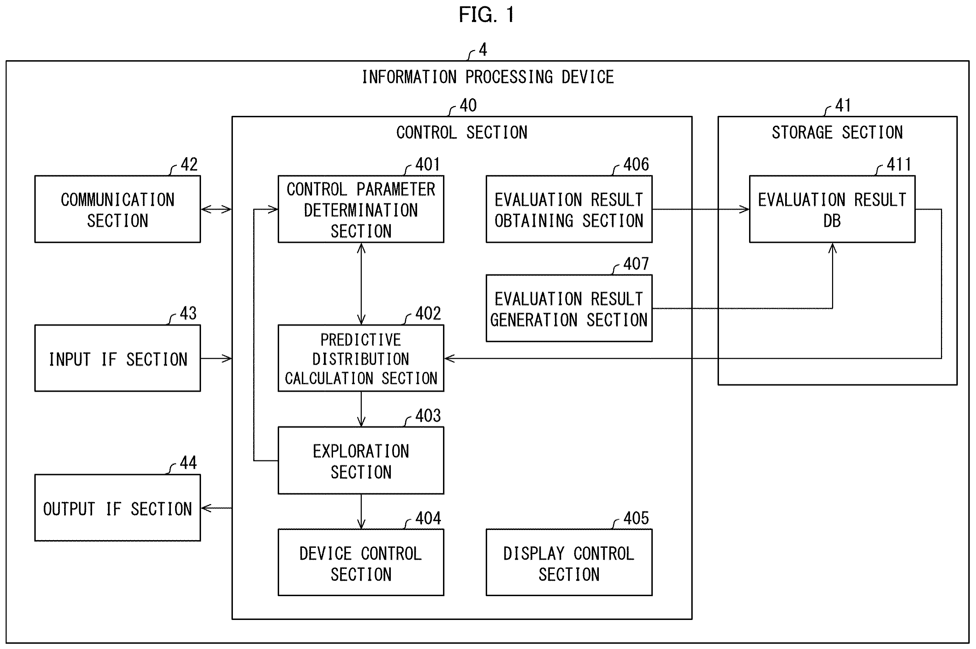

The following description will discuss the configuration of the information processing device 4 with reference to Fig. 1. Fig. 1 is a block diagram of the configuration of the main sections of the information processing device 4. As illustrated in Fig. 1, the information processing device 4 includes a control section 40 that comprehensively controls the sections of the information processing device 4, and a storage section 41 that stores various data used by the information processing device 4. In addition, the information processing device 4 includes: a communication section 42 that allows the information processing device 4 to communicate with other devices; an input interface (IF) section 43; and an output IF section 44.

The input device 6 illustrated in Fig. 2 can be connected to the information processing device 4 via the input IF section 43, and the display device 5 illustrated in Fig. 2 can be connected to the information processing device 4 via the output IF section 44. Here, the information processing device 4 may include an input section that receives input and a display section that displays information.

Further, the control section 40 includes a control parameter determination section 401, a predictive distribution calculation section (predictive distribution update section) 402, an exploration section 403, a device control section 404, a display control section 405, an evaluation result obtaining section 406, and an evaluation result generation section 407. Then, the storage section 41 stores the evaluation result database (DB) 411.

The control parameter determination section 401 determines a control parameter to be applied to the task executed by the crane 2. The control parameter determined by the control parameter determination section 401 is that optimized by the predictive distribution calculation section 402 and the exploration section 403.

The predictive distribution calculation section 402 calculates a predictive distribution of an evaluation function for evaluating the control parameter with use of an evaluation result by the evaluator. Further, when obtaining a new evaluation result after the calculation of the predictive distribution, the predictive distribution calculation section 402 updates the predictive distribution based on the evaluation result. Here, the evaluation result is obtained by the evaluation result obtaining section 406 and is recorded in the evaluation result DB 411, so that the predictive distribution calculation section 402 can read out the evaluation result from the evaluation result DB 411.

The exploration section 403 explores a candidate for the optimum value of the control parameter based on the predictive distribution calculated and updated by the predictive distribution calculation section 402. The details of the calculation method of the predictive distribution and the exploration method of the candidate will be described later.

The device control section 404 causes the crane 2 to execute the task by applying the candidate for optimum value of the control parameter determined by the exploration section 403. Here, the device control section 404 in accordance with the present embodiment controls, via the control device 1, the crane 2 to execute the task; however, it may be configured to control the crane 2 without passing through the control device 1. In this case, the information processing device 4 also serves as a control device of the crane 2.

The display control section 405 causes the display device 5 to display a moving image or a plurality of still images constituting a time series capturing the execution of the task executed by the crane 2. Thus, the moving image or the still images are presented to the evaluator. Here, as described above, when the crane 2 executes the task, a candidate for the optimum value of the control parameter is applied.

Further, the display control section 405 may simultaneously present, for each candidate, to the evaluator, a moving image or a plurality of still images constituting a time series each capturing the execution of the task executed by applying the candidate. For example, as in the example of Fig. 2, the display control section 405 can display moving images or still images corresponding to respective candidates on a single display, to simultaneously present them.

The evaluation result obtaining section 406 obtains a result of evaluation of the control parameter for causing the device to execute the predetermined task for treating waste. More specifically, this evaluation result shows a result of evaluation of each candidate for the optimum value of the control parameter conducted by the evaluator who observes the execution of the task executed by applying the candidate.

The evaluation result DB 411 stores the evaluation results of the candidates conducted by the evaluator. More specifically, each evaluation result stored in the evaluation result DB 411 is obtained by correlating the evaluation result by the evaluator with the candidate for the control parameter subjected to the evaluation.

As described in the foregoing, the information processing device 4 includes: the evaluation result obtaining section 406 configured to obtain, for a control parameter for causing a device to execute a predetermined task for treating waste, a result of evaluation of each of a plurality of candidates for an optimum value of the control parameter conducted by an evaluator who observes execution of the task executed by applying the candidate; the predictive distribution calculation section 402 that updates a predictive distribution of an evaluation function for evaluating the control parameter with use of the evaluation result; and the exploration section 403 that explores a candidate for the optimum value of the control parameter based on the updated predictive distribution. This makes it possible to derive an appropriate control parameter for the crane 2 executing a predetermined task for treating waste.

Further, the information processing device 4 is configured to repeat, until a predetermined condition is satisfied: a process of exploring a plurality of the candidates for the optimum value of the control parameter by the exploration section 403; a process of obtaining, by the evaluation result obtaining section 406, the result of evaluation of each of the plurality of the candidates determined by the exploration section 403, conducted by the evaluator who observes execution of the task executed by applying the candidate; a process of updating, by the predictive distribution calculation section 402, the predictive distribution with use of the evaluation result; and a process of exploring, by the exploration section 403, a candidate for the optimum value of the control parameter based on the updated predictive distribution.

According to the foregoing configuration, a plurality of candidates to be evaluated are determined by exploration based on the predictive distribution, so that it is possible to apply candidates with higher validity than when candidates are randomly selected. This makes it possible to derive an appropriate control parameter efficiently with a small number of trials.

Further, the information processing device 4 may include the display control section 405 that simultaneously presents, for each candidate for the optimum value of the control parameter, to the evaluator, a moving image or a plurality of still images constituting a time series each capturing the execution of the task executed by applying the candidate. Then, the evaluation result obtaining section 406 may obtain the result of evaluation of the candidate conducted by the evaluator who observes the execution of the task through the moving image or the still images. Here, when displaying the plurality of still images constituting a time series, the display control section 405 sequentially displays the still images in time series.

According to the foregoing configuration, the moving image or the plurality of still images constituting a time series each capturing the execution of the task executed by applying each candidate, are simultaneously presented, so that the evaluator can easily recognize matching points and different points in each execution of the task. Thus, it is possible to improve the validity of the evaluation result and the validity of the candidates to be determined. Further, by causing the evaluator to evaluate moving images or still images obtained by capturing the execution of the task and presented simultaneously, it is possible to obtain a reasonable evaluation result even for a task where it is difficult to perform an evaluation by using measurements obtained by, for example, installing a sensor to the crane 2. Here, presenting and evaluating a moving image or a still image is merely an example method. For example, it may be arranged for the evaluator to directly observe the execution of the task executed by the crane 2.

The information processing device 4 further includes the device control section 404 configured to cause the crane 2 to execute the task by transmitting a candidate for the optimum value of the control parameter, and the evaluation result obtaining section 406 obtains the result of evaluation of the candidate conducted by the evaluator who observes the execution of the task executed by being controlled by the device control section 404. This makes it possible to cause the crane 2 to automatically execute the task in which the candidate for the control parameter is applied. It is also possible to automatically obtain the evaluation result of the candidate.

[Details of calculation of predictive distribution and exploration for candidate]

Hereunder, preferential Bayesian policy optimization (PBPO) is used in calculation of the predictive distribution and in exploration for a candidate for the optimum value of the control parameter.

First, Bayesian optimization (BO) will be described before the description of PBPO. BO is used to obtain optimum parameter $w^*$ for function $f(w)$, where $w \in W$, in a case where the optimization of $f(w)$ is analytically difficult. In BO, candidate $w'$ for the optimum value is obtained by optimizing acquisition function $\alpha(w)$ as a surrogate function. This may be mathematically expressed as the following Equation (1).

$$\mathbf{w}' \leftarrow \arg \max_{\mathbf{w}} \alpha(\mathbf{w}) \qquad (1)$$

Next, evaluation value $e = f(w')$ of candidate $w'$ for the optimum value calculated by this Equation (1) is obtained, and the acquisition function is updated based on the evaluation value. In BO, these processes are repeated until the parameter converges to $w^*$.

The relationship between the parameter and the evaluation function values in BO is regressed with $e_n = f_n + \varepsilon_n$ by a Gaussian process. Here, $f_n = f(w_n)$. Further, $\varepsilon_n$ to $N(0, \beta)$ are Gaussian noise. In the Gaussian process, the evaluation function is regressed in the form of the predictive distribution. Assuming that $W := [w_1, \dots w_N]^T$ is the evaluated parameter and $E := [e_1, \dots, e_n]^T$ is the evaluation value, the predictive distribution is expressed by the following Equation (2).

$$p(f(\mathbf{w}) \,|\, \mathbf{w}, \mathbf{E}, \mathbf{W})$$
$$= \mathcal{N}(f(\mathbf{w}) \,|\, \mu(\mathbf{w}), \sigma^2(\mathbf{w})), \qquad (2)$$

$$\mu(\mathbf{w}) = \mathrm{k}_{\mathbf{W},*}^T (\mathbf{K}_{\mathbf{W}} + \beta \mathbf{I})^{-1} \mathbf{E}, \qquad (3)$$

$$\sigma^2(\mathbf{w}) = \mathrm{k}(\mathbf{w}, \mathbf{w}) - \mathrm{k}_{\mathbf{W},*}^T (\mathbf{K}_{\mathbf{W}} + \beta \mathbf{I})^{-1} \mathrm{k}_{\mathbf{W},*} \qquad (4)$$

Where $k(\cdot,\cdot)$ is a kernel function with a kernel parameter $\theta_k$ and capable of calculating the similarity between data. Further, $K_W$ is a kernel Gram matrix in which $[K_W]_{ij} = k(w_i,w_j)$. Here, I is the unit matrix. In addition, mean function $\mu(w)$ shown in the above Equation (3) and dispersion function $\sigma^2(w)$ shown in the above Equation (4) represent the mean and variance of the predictive distribution, respectively. The value of $\sigma^2(w)$ tends to increase in the region where data is insufficient.

In PBPO, it is assumed that, unlike BO described above, evaluation value e cannot be obtained directly. Instead, the predictive distribution is updated based on the preference relationship indicating the evaluator's preference as to query $(w^0,w^1)$ in which two control parameters are combined, that is, which parameter was evaluated by evaluator to be more preferable.

For example, suppose that an evaluator's evaluation result of the query is obtained in the form of y = 0 when $w^1$ is more preferable compared with $w^0$ and y = 1 when $w^0$ is more preferable compared with $w^1$. In this case, assuming that the evaluator's evaluation of the control parameter is carried out by latent evaluation function $f(\cdot)$, y is expressed by the following Equation (5).

$$y = \left\{ \begin{array}{ll} 0, & \text{if } f(\mathbf{w}^0) \geq f(\mathbf{w}^1) \\ 1, & \text{if } f(\mathbf{w}^0) < f(\mathbf{w}^1) \end{array} \right. \qquad (5)$$

In a case where y is expressed as described above, the evaluation result obtaining section 406 determines the value of y from the evaluation result by the evaluator for the query, and records the determined value of y in the evaluation result DB 411 in association with the query. This evaluation result indicates the preference relationship indicating whether the evaluator evaluates $w^0$ or $w^1$ to be more preferable.

Hereunder, BO for the abovementioned problem formulation is referred to as preference based BO (PbBO). In addition, hereunder, $f(w^0)$ and $f(w^1)$ are referred to as $f^0$ and $f^1$, respectively. In PbBO, the probability distribution is used to handle the preference relationship, and the variational inference is used to approximately obtain the distribution of the latent evaluation function based on the evaluation results for the query. This will be described in detail below.

First, the kernel parameter is denoted as $\theta_k \in \Theta$ and prior distribution $p(f|\theta_k)$ is expressed by the Gaussian process with the mean 0 and the covariance matrix K. Further, assuming that the preference relationship is affected by Gaussian noise, the likelihood of the preference relationship is defined as in the following Equation (6).

$$p(y|f^0, f^1) = \int_{-\infty}^{\frac{f^1 - f^0}{\sqrt{2}\epsilon}} \mathcal{N}(\gamma|0,1)d\gamma \qquad (6)$$

$$\left( \epsilon \text{ is hyperparameter} \right)$$

Further, evaluation result Y for each query W can be expressed by the following Equation (7).

$$p(\mathbf{Y}|f) = \prod_{i=1}^{N} p(y_i|f_i^0, f_i^1) \qquad (7)$$

$$\mathbf{W} := \left\{ \mathbf{w}_i^0, \mathbf{w}_i^1 \right\}_{i=1}^{N}$$

$$\mathbf{Y} := \left\{ y_i \right\}_{i=1}^{N}$$

Here, f := f(W). Thus, according to Bayes' theorem, the posterior distribution is expressed by the following Equation (8).

$$p(f|\mathbf{Y}, \boldsymbol{\theta}_k) = \frac{p(\mathbf{Y}|f)p(f|\boldsymbol{\theta}_k)}{\int p(\mathbf{Y}|f)p(f|\boldsymbol{\theta}_k)df}, \qquad (8)$$

Since the likelihood shown in this Equation (6) is obtained only numerically, the posterior distribution cannot be obtained analytically. Thus, p(f|Y, $\theta_k$) is approximated by the variational Bayesian method. Specifically, variational distribution q(f) is set as follows.

$$q(\boldsymbol{f}) \approx p(\boldsymbol{f}|\mathbf{Y}, \boldsymbol{\theta}_k)$$

Then, considering maximizing the value obtained by taking the logarithm of the marginal likelihood ∫p(Y|f)p(f|$\theta_k$) df, the evidence lower bound (ELBO) on the righthand side is obtained as shown in the following Equation (9). Thus, ELBO is maximized instead of the marginal likelihood.

$$\log p(\mathbf{Y}|\boldsymbol{\theta}_k)$$
$$= \log \int \frac{q(\boldsymbol{f})p(\mathbf{Y}|\boldsymbol{f})p(\boldsymbol{f}|\boldsymbol{\theta}_k)}{q(\boldsymbol{f})} d\boldsymbol{f}$$
$$\geq \int q(\boldsymbol{f}) \log p(\mathbf{Y}|\boldsymbol{f}) d\boldsymbol{f} - \int q(\boldsymbol{f}) \log \frac{q(\boldsymbol{f})}{p(\boldsymbol{f}|\boldsymbol{\theta}_k)} d\boldsymbol{f}$$
$$= \mathbb{E}_{q(\boldsymbol{f})} \left[\log p(\mathbf{Y}|\boldsymbol{f})\right] - KL(q(\boldsymbol{f})\|p(\boldsymbol{f}|\boldsymbol{\theta}_k)) \qquad (9)$$

Here, if q(f) = N($\mu,\Sigma$), then ELBO can be modified as in the following Equation (10).

$$ELBO = \sum_{i=1}^{N} \mathbb{E}_{q(\boldsymbol{f})} \left[\log p(y_i|f_i^0, f_i^1)\right] - \frac{1}{2}\mathrm{tr}\{\mathbf{K}^{-1}\boldsymbol{\Sigma}\}$$
$$- \frac{1}{2}\boldsymbol{\mu}^{\mathrm{T}}\mathbf{K}^{-1}\boldsymbol{\mu} + \frac{1}{2}\log|\boldsymbol{\Sigma}| + \frac{1}{2}\log|\mathbf{K}| + \frac{N}{2} \qquad (10)$$

Then, these values can be determined by, for example, alternately executing optimization of variational parameters $\mu$ and $\Sigma$ and optimization of $\theta$ by using automatic differentiation. In PbBO, the posterior distribution required to calculate the predictive distribution can be calculated in this way.

That is, the predictive distribution calculation section 402 can calculate the predictive distribution in accordance with the evaluation result recorded in the evaluation result DB 411 by the operation using Equation (10). When a new evaluation result is obtained by the evaluation result obtaining section 406, the predictive distribution calculation section 402 can update the predictive distribution with use of the new evaluation result.

As described above, the query to be evaluated may be alternately answerable. Alternatively, a query may be generated to include a set of three or more different candidates. In this case, the evaluator may observe execution of each task executed by applying each candidate and enter an evaluation result indicating one or more candidates determined to be relatively preferable.

For example, when a query is generated to include a set of three candidates for the control parameter, that is, candidate w1, candidate w2, and candidate w3, the evaluator may be made to select one candidate that is determined to be the most preferable. In this case, if candidate w1 is selected, the preference relationship for the set is that candidate w1 is preferable to candidate w2 and candidate w1 is preferable to candidate w3.

Alternatively, the evaluator may be allowed to select two or more candidates determined to be preferable when evaluating the query. For example, in the above example, if two candidates w1 and w2 are selected as relatively preferable ones, the preference relationship for this set is such that candidate w1 is preferable to candidate w3 and candidate w2 is also preferable to candidate w3.

In addition, the evaluator may be made to rank the candidates when evaluating the query. In this case, the preference relationship for the set of candidates having consecutive ranks may be employed as the evaluation result. For example, in the above example, if the evaluator determines that candidate w1, candidate w2, and candidate w3 are preferable in this order, the preference relationship for this set will be that candidate w1 is preferable to candidate w2, and candidate w2 is preferable to candidate w3. In addition to these preference relationships, a preference relationship that candidates w1 are preferable to candidates w3 may also be added to the evaluation result.

As described in the foregoing, for a set of executions of the task executed by applying different candidates, the evaluation result obtaining section 406 may obtain the evaluation result that indicates a candidate evaluated to be relatively preferable by the evaluator. Then, the predictive distribution calculation section 402 may update the predictive distribution based on the preference relationship of the set indicated by the obtained evaluation result. Thus, the evaluator only needs to select one or more of the plurality of tasks determined to be preferable, so that the workload of the evaluator in the evaluation can be reduced.

After the predictive distribution calculation section 402 calculates the predictive distribution in the manner described above, the exploration section 403 explores a candidate for the optimum value of the control parameter based on the calculated predictive distribution. Here, the inference of f' for the new candidate w' is expressed by the following Equation (11).

$$p(f'|\mathbf{Y}, \mathbf{w}') = \int p(f'|\mathbf{Y}, \boldsymbol{f}, \mathbf{w}')q(\boldsymbol{f})d\boldsymbol{f} \qquad (11)$$

The exploration section 403 can select candidate $w_0'w_1'$ for the control parameter for the new query by using the above Equation (11). The method of selection is not particularly limited. For example, the exploration section 403 may select a candidate by using Thompson Sampling (TS) as the acquisition function. In TS, a function is sampled from Equation (11) across W, and, as a candidate, w', which is the largest in the sampled function, is selected. By repeating this process twice, the exploration section 403 can select the candidate $w_0'w_1'$ for the control parameter for the new query. Further, the exploration section 403 can also select candidates for three or more control parameters in the same manner.

[Process when both alternatives of query are not preferable]

There may be a case where the evaluator determines that none of the set of moving images or still images included in the presented query is preferable. For such a query, evaluation may be skipped without forcing the evaluator to show a preference, so that the candidates corresponding to the query may be discarded without being recorded in the evaluation result DB 411. However, in this case, the generated query is wasted and this decreases the efficiency.

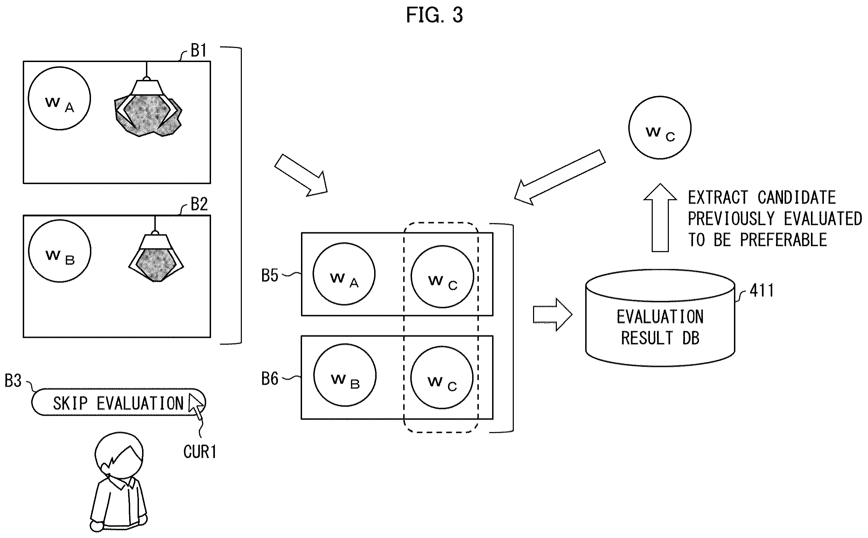

In this regard, since the information processing device 4 includes the evaluation result generation section 407, the predictive distribution can be updated also by effectively utilizing the query in which none of alternatives is preferable. Hereunder, the details of the processing carried out by the evaluation result generation section 407 will be described with reference to Fig. 3. Fig. 3 is a diagram illustrating an example of generation of evaluation results.

Fig. 3 depicts an example in which image B1 showing the execution of the task executed by applying control parameter $w_A$ and image B2 showing the execution of the task executed by applying control parameter $w_B$ are presented to the evaluator. In addition, object B3 for skipping the evaluation of these control parameters is also presented to the evaluator. Here, the objects through which the evaluator can select a candidate for the control parameter evaluated to be more preferable are not shown in Fig. 3.

The evaluator compares the execution of the task shown in image B1 and the execution of the task shown in B2, and then, when it is determined that none of them is preferable, the evaluator selects the object B3 with the cursor CUR1.

In a case where the evaluation is skipped in this way, that is, none of the executions of the task in the set of the executions of the task executed by applying different candidates has been evaluated to be preferable, the evaluation result generation section 407 generates an evaluation result. More specifically, the evaluation result generation section 407 generates an evaluation result by correlating the skipped candidates with a candidate previously evaluated to be preferable.

Specifically, the evaluation result generation section 407 selects, from among the evaluation results each indicating the past evaluation result included in the evaluation result DB 411, a candidate for the control parameter previously evaluated to be preferable. Any selection method may be employed. For example, the evaluation result generation section 407 may select one or two candidates at random from among candidates for the control parameter previously evaluated to be preferable. Here, it is assumed that the control parameter selected is denoted as $w_C$ as illustrated in the figure.

Next, the evaluation result generation section 407 generates evaluation results B5 and B6 by correlating the selected candidate $w_C$ for the control parameter with both candidates $w_A$ and $w_B$ for the control parameter, which are not evaluated to be preferable. For example, when the evaluation result is expressed in the form of Equation (5) above, the evaluation result B5 is obtained by correlating y = 0 with respect to $(w_C,w_A)$, and the evaluation result B6 is obtained by correlating y = 0 with respect to $(w_C,w_B)$.

In this way, the evaluation result generation section 407 can generate two evaluation results, that is, the evaluation results B5 and B6, from the query of candidates $w_A$ and $w_B$ for the control parameter, which are not evaluated to be preferable. The evaluation results B5 and B6 are added to the evaluation result DB 411 and used to update the predictive distribution.

Here, in a stage in which there is no candidate evaluated to be preferable by the evaluator, the evaluation result generation section 407 stores the query in which both alternatives are not preferable. The evaluation result generation section 407 may continue to accumulate queries as long as the evaluator keeps skipping evaluations, and may generate an evaluation result by correlating the candidates evaluated to be preferable with the candidates corresponding to the accumulated queries when the evaluator shows a preference.

Alternatively, a query may be generated to include a set of three or more candidates, as described above. Even when the query corresponding to three or more candidates is skipped, the evaluation result generation section 407 can generate an evaluation result in a manner similar to that described above.

As described in the foregoing, the information processing device 4 includes the evaluation result generation section 407 that generates, when none of the candidates included in the set of executions of the task executed by applying the different candidates is evaluated to be preferable, an evaluation result obtained by correlating a candidate previously evaluated to be preferable for each candidate. Thus, it is possible to effectively utilize evaluation results in which preference relationships cannot be specified, and to use them for updating the predictive distribution.

Although the details are omitted, the following have been confirmed by experiments conducted by the inventors of the present application. That is, by employing the foregoing configuration for generating evaluation results, it is possible to obtain a control parameter for use in a task using a crane with high performance based on evaluation by humans without using an evaluation function. It was also confirmed in the experiments that a control parameter with high performance can be obtained at a stage where the number of evaluator's evaluations is less.

[Flow of exploration method]

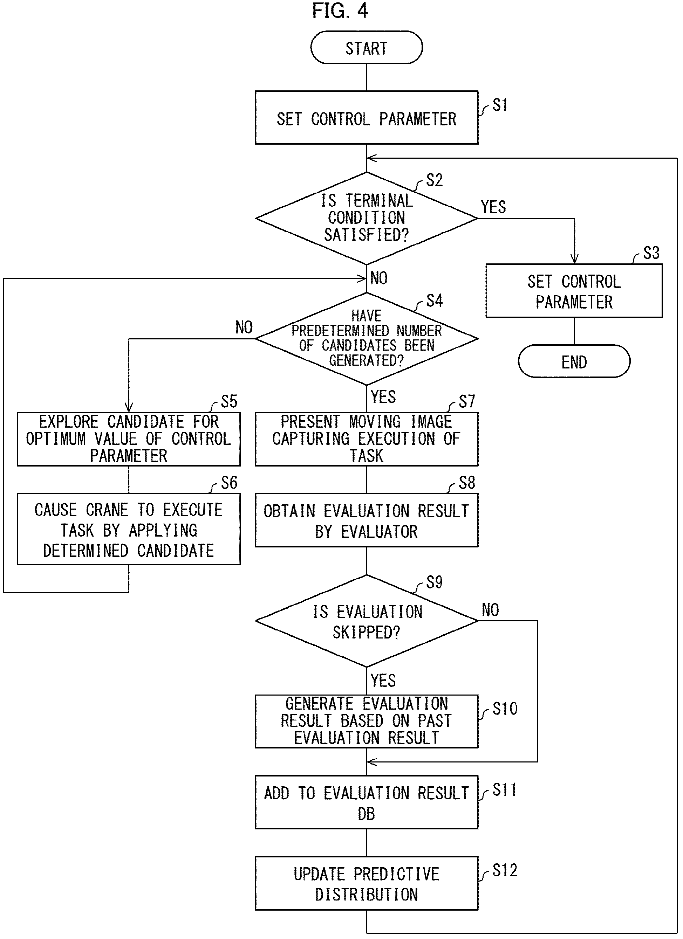

The following description will discuss the flow of the exploration method in accordance with the present embodiment with reference to Fig. 4. Fig. 4 is a flowchart illustrating the exploration method.

In S1, the control parameter determination section 401 sets the control parameter of the crane 2 to an initial value. The initial value may be set by any method. For example, the control parameter determination section 401 may set a value selected at random from the range of values that can be taken by the control parameter as the initial value, or may set a value specified by the user as the initial value.

In S2, the control parameter determination section 401 determines whether or not a predetermined terminal condition is satisfied based on a predictive distribution after being updated in S12 described later. If it is determined that the condition is satisfied (YES in S2), the operation proceeds to S3, and if it is determined that the condition is not satisfied (NO in S2), the operation proceeds to S4. Here, it is determined to be NO at the first execution of S2.

In S3, the control parameter determination section 401 determines the control parameter when the terminal condition is satisfied, as the optimum control parameter to be applied to the control of the crane 2. This terminates the processes of Fig. 4. The control parameter determination section 401 may output the determined control parameter to the display device 5 or the like, or alternatively, the control parameter determination section 401 may notify the control device 1 of the control parameter to apply the control parameter.

In S4, the exploration section 403 determines whether or not a predetermined number of candidates for the optimum value of the control parameter have been generated. If it is determined that the predetermined number of candidates has not been generated (NO in S4), the operation proceeds to S5, and if it is determined that the predetermined number of candidates has been generated (YES in S4), the operation proceeds to S7. Here, since TS is a stochastic sampling, there is a possibility that the same candidates will be selected. Thus, in S4, it is determined to be YES when a predetermined number of different candidates are generated. As described above, two candidates may be used as a single query, or three or more candidates may be used as a single query. The predetermined number in the former case is two, and the predetermined number in the latter case is three or more.

In S5 (exploration step), the exploration section 403 explores a candidate for the optimum value of the control parameter. For example, the exploration section 403 may explore for a candidate for the optimum value by TS as described above.

In S6, the device control section 404 causes the crane 2 to execute the task by applying the candidate determined in S5. As described with reference to Fig. 2, the execution of the task is captured by the imaging device 3, and the moving image obtained by the capturing is inputted into the information processing device 4. After completion of S6, the operation returns to S4. Here, instead of the moving image, a plurality of still images constituting a time series may be captured as described above.

In S7, the display control section 405 causes the display device 5 to display the abovementioned moving image obtained by capturing the execution of the task executed by the crane 2 by applying each candidate for the optimum value of the control parameter. Thus, the moving images are presented to the evaluator. Here, for the plurality of candidates, the display control section 405 may sequentially or simultaneously present, to the evaluator, the respective moving images each being obtained by capturing the execution of the task executed by applying the corresponding candidate. The moving images presented are a query to the evaluator. At this time, the display control section 405 may display a user interface (UI) screen that includes an object through which the evaluator selects a candidate evaluated to be more preferable and an object for skipping evaluation.

In S8 (evaluation result obtaining step), the evaluation result obtaining section 406 obtains the evaluation result by the evaluator of the moving images presented in S7. The evaluator's evaluation result may be inputted via, for example, the input device 6. Here, the evaluator may skip the evaluation when it is difficult to select a more preferable candidate, as described above. If the evaluation is skipped, no evaluation result is obtained in S8.

In S9, the evaluation result obtaining section 406 determines whether or not the evaluation is skipped. If it is determined that the evaluation is skipped (YES in S9), that is, none of the candidates is evaluated to be preferable, the operation proceeds to S10. On the other hand, if it is determined that the evaluation is not skipped (NO in S9), the operation proceeds to S11.

In S10, based on the past evaluation results, the evaluation result generation section 407 generates an evaluation result of the candidate whose evaluation is skipped. More specifically, the evaluation result generation section 407 selects a candidate for the control parameter corresponding to the candidate determined to be preferable from among the evaluation results included in the evaluation result DB 411, and then, the evaluation result generation section 407 generates an evaluation result by correlating the selected candidate with each of the candidates corresponding to the task presented in the most recent S7.

In S11, to which the operation transitions from S9, the evaluation result obtaining section 406 adds the evaluation result obtained in S8 to the evaluation result DB 411. On the other hand, in S11, to which the operation transitions from S10, the evaluation result generation section 407 adds the evaluation result generated in S10 to the evaluation result DB 411. The evaluation result recorded in the evaluation result DB 411 may be data expressed in a format in which, with a set of candidates for the control parameter corresponding to a single query, a value of y in Equation (5) indicating the evaluation result of the set is correlated, as described above.

In S12 (predictive distribution update step), the predictive distribution calculation section 402 updates the predictive distribution of the evaluation function (latent evaluation function described above) for evaluating the control parameter with use of the evaluation result added in S11. Thereafter, the operation returns to S2.

As described in the foregoing, the exploration method in accordance with the present embodiment includes: the evaluation result obtaining step (S8) of obtaining, for a control parameter for causing the crane 2 to execute a predetermined task for treating waste, a result of evaluation of each of a plurality of candidates for an optimum value of the control parameter conducted by an evaluator who observes execution of the task executed by applying the candidate; the predictive distribution update step (S12) of updating a predictive distribution of an evaluation function for evaluating the control parameter with use of the evaluation result; and the exploration step (S5) of exploring a candidate for the optimum value of the control parameter based on the updated predictive distribution. This makes it possible to derive an appropriate control parameter for the crane 2 executing a predetermined task for treating waste.

[Variations]

Any entity can execute each of the processes described in the foregoing embodiment, and is not limited to the one in the above examples. That is, the same function as the information processing device 4 may be provided by a plurality of information processing devices that can communicate with each other. For example, the processes illustrated in Fig. 4 may be executed by being shared between a plurality of information devices.

[Software implementation example]

The functions of the information processing device 4 can be realized by a program (exploration program) for causing a computer to function as the information processing device 4, the program causing the computer to function as control blocks (in particular, sections included in the control section 40) of the information processing device 4.

In this case, the information processing device 4 includes, as hardware for executing this program, a computer that has at least one control device (e.g., processor) and at least one storage device (e.g., memory). The functions described in the above embodiments are realized by executing the program by the control device and the storage device.

The program can be stored in one or more non-transitory, computer-readable storage medium. The storage medium may or may not be provided in the information processing device 4. In the latter case, the program may be made available to the information processing device 4 via any wired or wireless transmission medium.

Further, some or all of functions of the control blocks can be realized by a logic circuit. For example, the present invention encompasses, in its scope, an integrated circuit in which a logic circuit that functions as the control blocks is formed. In addition, it is possible to realize the functions of the control blocks by, for example, a quantum computer.

The present invention is not limited to the embodiments, but can be variously altered by a skilled person in the art within the scope of the claims. The present invention also encompasses, in its technical scope, any embodiment derived by combining technical means disclosed in the embodiments.

Aspects of the present invention can also be expressed as follows:

An information processing device in accordance with Aspect 1 of the present invention includes: an evaluation result obtaining section configured to obtain, for a control parameter for causing a device to execute a predetermined task for treating waste, a result of evaluation of each of a plurality of candidates for an optimum value of the control parameter conducted by an evaluator who observes execution of the task executed by applying the candidate; a predictive distribution update section that updates a predictive distribution of an evaluation function for evaluating the control parameter with use of the evaluation result; and an exploration section that explores a candidate for the optimum value of the control parameter based on the updated predictive distribution.

An information processing device in accordance with Aspect 2 of the present invention, is configured, in Aspect 1, to repeat, until a predetermined condition is satisfied: a process of exploring a plurality of the candidates by the exploration section; a process of obtaining, by the evaluation result obtaining section, the result of evaluation of each of the plurality of the candidates determined by the exploration section, conducted by the evaluator who observes execution of the task executed by applying the candidate; a process of updating, by the predictive distribution update section, the predictive distribution with use of the evaluation result; and a process of exploring, by the exploration section, a candidate for the optimum value of the control parameter based on the updated predictive distribution.

An information processing device in accordance with Aspect 3 of the present invention is configured, in Aspect 1 or 2, to further include a display control section that simultaneously presents, for each candidate, to the evaluator, a moving image or a plurality of still images constituting a time series each capturing execution of the task executed by applying the candidate, wherein the evaluation result obtaining section obtains the result of evaluation of the candidate conducted by the evaluator who observes the execution of the task through the moving image or the still images.

An information processing device in accordance with Aspect 4 of the present invention is configured, in any one of Aspects 1 to 3, to further include a device control section configured to cause the device to execute the task by applying each candidate, wherein the evaluation result obtaining section obtains the result of evaluation of the candidate conducted by the evaluator who observes the execution of the task executed by being controlled by the device control section.

An information processing device in accordance with Aspect 5 of the present invention is configured, in any one of Aspects 1 to 4, so that the evaluation result obtaining section obtains, for a set of executions of the task executed by applying different candidates, an evaluation result that indicates a candidate evaluated to be relatively preferable by the evaluator, and the predictive distribution update section updates the predictive distribution based on a preference relationship for the set indicated by the evaluation result.

An information processing device in accordance with Aspect 6 of the present invention is configured, in Aspect 5, to further include an evaluation result generation section that generates, when none of the candidates included in the set is evaluated to be preferable, an evaluation result obtained by correlating the candidates with candidates previously evaluated to be preferable.

A waste treatment system in accordance with Aspect 7 of the present invention includes: a device configured to execute a predetermined task for treating waste; an imaging device configured to capture execution of the task executed by applying each of a plurality of candidates for an optimum value of a control parameter for causing the device to execute the task; a display device configured to display a moving image or a plurality of still images constituting a time series, the moving image and the plurality of still images being captured by the imaging device; an input device configured to receive input of a result of evaluation of the candidate conducted by an evaluator who observes the execution of the task through the moving image or the still images displayed on the display device; and an information processing device configured to update a predictive distribution of an evaluation function for evaluating the control parameter with use of the evaluation result and to explore a candidate for the optimum value of the control parameter based on the updated predictive distribution.

An exploration method in accordance with Aspect 8 of the present invention is an exploration method carried out by one or more information processing devices, the exploration method including: an evaluation result obtaining step of obtaining, for a control parameter for causing a device to execute a predetermined task for treating waste, a result of evaluation of each of a plurality of candidates for an optimum value of the control parameter conducted by an evaluator who observes execution of the task executed by applying the candidate; a predictive distribution update step of updating a predictive distribution of an evaluation function for evaluating the control parameter with use of the evaluation result; and an exploration step of exploring a candidate for the optimum value of the control parameter based on the updated predictive distribution.

An exploration program in accordance with Aspect 9 of the present invention is an exploration program for causing a computer to function as the information processing device in accordance with Aspect 1, the exploration program causing the computer to function as the evaluation result obtaining section, the predictive distribution update section, and the exploration section.

Reference Signs List

1 Control device
2 Crane (device)
3 Imaging device
4 Information processing device
402 Predictive distribution calculation section (predictive distribution update section)
403 Exploration section
404 Device control section
405 Display control section
406 Evaluation result obtaining section
5 Display device
10 Treatment system

**Claims**

1. An information processing device comprising:

   an evaluation result obtaining section configured to obtain, for a control parameter for causing a device to execute a predetermined task for treating waste, a result of evaluation of each of a plurality of candidates for an optimum value of the control parameter conducted by an evaluator who observes execution of the task executed by applying the candidate;
   a predictive distribution update section that updates a predictive distribution of an evaluation function for evaluating the control parameter with use of the evaluation result; and
   an exploration section that explores a candidate for the optimum value of the control parameter based on the updated predictive distribution.

2. The information processing device according to claim 1, wherein the information processing device is configured to repeat, until a predetermined condition is satisfied:

   a process of exploring a plurality of the candidates by the exploration section;
   a process of obtaining, by the evaluation result obtaining section, the result of evaluation of each of the plurality of the candidates determined by the exploration section, conducted by the evaluator who observes execution of the task executed by applying the candidate;
   a process of updating, by the predictive distribution update section, the predictive distribution with use of the evaluation result; and
   a process of exploring, by the exploration section, a candidate for the optimum value of the control parameter based on the updated predictive distribution.

3. The information processing device according to claim 1 or 2, further comprising a display control section that simultaneously presents, for each candidate, to the evaluator, a moving image or a plurality of still images constituting a time series each capturing execution of the task executed by applying the candidate,
   wherein the evaluation result obtaining section obtains the result of evaluation of the candidate conducted by the evaluator who observes the execution of the task through the moving image or the still images.

4. The information processing device according to claim 1 or 2, further comprising a device control section configured to cause the device to execute the task by applying each candidate,
   wherein the evaluation result obtaining section obtains the result of evaluation of the candidate conducted by the evaluator who observes the execution of the task executed by being controlled by the device control section.

5. The information processing device according to claim 1 or 2, wherein

   the evaluation result obtaining section obtains, for a set of executions of the task executed by applying different candidates, an evaluation result that indicates a candidate evaluated to be relatively preferable by the evaluator, and

the predictive distribution update section updates the predictive distribution based on a preference relationship for the set indicated by the evaluation result.

6. The information processing device according to claim 5, further comprising an evaluation result generation section that generates, when none of the candidates included in the set is evaluated to be preferable, an evaluation result obtained by correlating the candidates with candidates previously evaluated to be preferable.

7. A waste treatment system comprising:

a device configured to execute a predetermined task for treating waste;
an imaging device configured to capture execution of the task executed by applying each of a plurality of candidates for an optimum value of a control parameter for causing the device to execute the task;
a display device configured to display a moving image or a plurality of still images constituting a time series, the moving image and the plurality of still images being captured by the imaging device;
an input device configured to receive input of a result of evaluation of the candidate conducted by an evaluator who observes the execution of the task through the moving image or the still images displayed on the display device; and
an information processing device configured to update a predictive distribution of an evaluation function for evaluating the control parameter with use of the evaluation result and to explore a candidate for the optimum value of the control parameter based on the updated predictive distribution.

8. An exploration method carried out by one or more information processing devices, the exploration method comprising:

an evaluation result obtaining step of obtaining, for a control parameter for causing a device to execute a predetermined task for treating waste, a result of evaluation of each of a plurality of candidates for an optimum value of the control parameter conducted by an evaluator who observes execution of the task executed by applying the candidate;
a predictive distribution update step of updating a predictive distribution of an evaluation function for evaluating the control parameter with use of the evaluation result; and
an exploration step of exploring a candidate for the optimum value of the control parameter based on the updated predictive distribution.

9. An exploration program for causing a computer to function as the information processing device according to claim 1, the exploration program causing the computer to function as the evaluation result obtaining section, the predictive distribution update section, and the exploration section.

FIG. 1

# FIG. 2

10

CONTROL PARAMETER

CONTROL DEVICE 1 → CONTROL → CRANE 2 → 3 → MOVING IMAGE → INFORMATION PROCESSING DEVICE 4

OUTPUT → 5

EVALUATION RESULT

A1 — W$_A$

A2 — W$_B$

A3 — I PREFER THIS ONE

A4 — I PREFER THIS ONE

CUR1

EVALUATOR

6

EP 4 660 904 A1

FIG. 3

## FIG. 4

START

SET CONTROL PARAMETER — S1

IS TERMINAL CONDITION SATISFIED? — S2

YES → SET CONTROL PARAMETER — S3 → END

NO

HAVE PREDETERMINED NUMBER OF CANDIDATES BEEN GENERATED? — S4

NO → EXPLORE CANDIDATE FOR OPTIMUM VALUE OF CONTROL PARAMETER — S5

CAUSE CRANE TO EXECUTE TASK BY APPLYING DETERMINED CANDIDATE — S6

YES → PRESENT MOVING IMAGE CAPTURING EXECUTION OF TASK — S7

OBTAIN EVALUATION RESULT BY EVALUATOR — S8

IS EVALUATION SKIPPED? — S9

NO

YES → GENERATE EVALUATION RESULT BASED ON PAST EVALUATION RESULT — S10

ADD TO EVALUATION RESULT DB — S11

UPDATE PREDICTIVE DISTRIBUTION — S12

**EP 4 660 904 A1**

## INTERNATIONAL SEARCH REPORT

| International application No. |
| --- |
| **PCT/JP2024/001947** |

| A. | CLASSIFICATION OF SUBJECT MATTER |
| --- | --- |

*G06N 99/00*(2019.01)i; *B65F 5/00*(2006.01)i
FI:   G06N99/00 180; B65F5/00

According to International Patent Classification (IPC) or to both national classification and IPC

| B. | FIELDS SEARCHED |
| --- | --- |

Minimum documentation searched (classification system followed by classification symbols)

G06N99/00; B65F5/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2021/171720 A1 (HITACHI ZOSEN CORP.) 02 September 2021 (2021-09-02)<br>in particular, paragraphs [0012]-[0062] | 1-2, 4-5, 8-9 |
| A | | 3, 6-7 |
| Y | 尾崎 令拓 ほか, ユーザの選好推定に基づく多目的ベイズ最適化によるハイパーパラメータ最適化, 人工知能学会全国大会論文集, 2022, pp. 1-4, (OZAKI, Ryota et al. Hyperparameter Optimization by Multi-objective Bayesian Optimization based on Inference of User Preference. Proceedings of the Annual Conference of JSAI.)<br>in particular, "3. Multiobjective bayesian optimization using preference inference" | 1-2, 4-5, 8-9 |
| A | | 3, 6-7 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 April 2024** | **16 April 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

| International application No. |
| --- |
| **PCT/JP2024/001947** |

| Patent document<br>cited in search report | Publication date<br>(day/month/year) | Patent family member(s) | Publication date<br>(day/month/year) |
| --- | --- | --- | --- |
| WO 2021/171720 A1 | 02 September 2021 | EP 4112498 A1<br>in particular, paragraphs<br>[0012]-[0054]<br>CN 115175868 A | |

**EP 4 660 904 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010275064 A